# EUROPEAN PATENT SPECIFICATION

(11) **EP 0 833 749 B1**
(45) Date of publication and mention of the grant of the patent: **28.01.2004**
(21) Application number: 96916411.0
(22) Date of filing: 23.05.1996
(51) Int. Cl.: B32B 31/04, B32B 31/08

(54) **METHOD AND DEVICE FOR PRODUCING A LAMINATED MATERIAL**
VERFAHREN UND VORRICHTUNG ZUR HERSTELLUNG EINES VERBUNDMATERIALS
PROCEDE ET DISPOSITIF POUR LA PRODUCTION D'UN MATERIAU STRATIFIE

(30) Priority: 30.05.1995 SE 9501967
(43) Date of publication of application: 08.04.1998
(73) Proprietor: Wellboard i Sverige AB, 860 35 Söröker (SE)
(72) Inventor: Ericsson, Karl-Gustav, 85235 Sundsvall (SE); Sehlin, Jan-Olof, 851 24 Sundsvall (SE)
(74) Representative: Olsson, Jan
(86) International application number: PCT/SE1996/000668
(87) International publication number: WO 1996/038303

(56) References cited:
- EP-A- 0 197 904
- EP-A- 0 315 066
- WO-A-87/05861

## Description

### FIELD OF THE INVENTION AND PRIOR ART

The present invention relates to a method for manufacturing laminated materials, wherein at least two layers are fed, joined and pressed against each other at a nip in such a way that a coupling interface between the layers is formed at the nip, and at least one of the layers is supplied with an adhesive for coupling the layers, before or adjacent to the nip.

The invention also relates to a device for manufacturing elements in laminated materials, wherein at least two layers are joined and pressed against each other, so as to form a coupling interface between them, the device comprising means for feeding the laminated material formed by the layers, means for joining and pressing the layers against each other so as to form a nip and means for supplying an adhesive to at least one of the layers.

Similar methods and devices to carry out these methods are known amongst other through the Swedish patent No. SE 451 371, in which the way for manufacturing constructional elements in laminated materials, so-called sandwich, is described, by which way a cellular core material is covered with a covering layer. The core material is thereby advanced from above and downwards in a vertical path, and the covering layers are joined and pressed against the core material in such a way that a nip is formed where the covering layer is abutting the core material. The nip is supplied with the adhesive in excess in such a way that a level of adhesive is formed at the nip alongside the core material and fills the open cells or pores on the surface of the core material and forces aside air or other gas to depart upwards. By advancing, in this way, the core material from above and downwards in a vertical path and not, like in other prior art, advancing the core material in a horizontal path, whereby the covering layers are applied on the upper and lower sides of the core material, the advantage will be achieved that air or other gas, which by prior art remains in the surface cells of the core material, thereby causing a worse adhesion between the core material and the covering layers, may depart upwards in such a way that air or gas inclusions in the cells of the core material thereby will be eliminated.

The covering layers usually consist of plastics, sheet metal or other suitable material, which is glued to the core material, which for example consists of cellular plastics or other suitable core material.

It is not unusual that the core material, which may be assumed to have a plate-like, stiff structure, is of considerable length, which makes it easy to realise that a method demanding vertical advancing of similar elements necessarily requires that a vertically large space is occupied by the devices that are used. Rooms are then required which can offer said space vertically, which leads to a significant problem as such rooms are not always available. This method causes furthermore that said stiff layers, which form the core material, are positioned on significant heights, to later be able to be advanced down through the actual device. The work operation or the work operations that thereby will be added are definitely a disadvantage in such a method.

Other problems that easily arise when tower constructions, which exceed the height of a man, are used are that it is required to construct these constructions in such a way that makes it possible to reach up to and get to primal parts of the arrangement on repair and maintenance. Furthermore, there is always a risk of falling at high constructions, concerning material as well as the personnel that handle the device.

### SUMMARY OF THE INVENTION

The object of the present invention is to provide a method and a device for manufacturing elements in laminated materials, by which the above described disadvantages in prior art completely or partly are remedied. There is thereby used a method in the invention according to the introduction to claim 1, which method is characterized in that the nip is arranged in such a way that the coupling interface between the layers at the nip is positioned in a plane that is separate from a horizontal plane with an angle of at least 10° and that the feeding occurs substantially in horizontal direction.

The particular advantage is thereby achieved, that the need for a tower-like construction for a vertical feeding will be set aside, whereby the practical disadvantages and the disadvantage according to the security that tower constructions lead to will be avoided effectively. Furthermore, there are thereby achieved considerably better conditions for manufacturing of long or very long elements in laminated materials. At the same there is achieved a surprisingly good removal of gas and air bubbles between existing layers without vertical feeding being required according to SE 451 371.

In a certain preferred method according to the present invention, the nip is arranged in such a way that the plane of the coupling interface at the nip is substantially perpendicular to a horizontal plane, i.e. it is vertically positioned.

There is thereby particularly achieved the advantage of similar coupling relations existing on both sides of a layer, which at the nip is to be joined with at least one further layer. This is particularly advantageous when the number of layers is three or more and when one of these layers forms an intermediate core layer and the other form outer layers located outside this core layer. As the intermediate core layer shows surface cells or inequalities, in which gas and air. tend to be trapped when the plane of the coupling interfaces coincides with a horizontal plane at the nip and the feeding occurs in horizontal direction, similar gas- and air entrapments will be avoided by means of this characteristic, as effective on both sides of the intermediate core layer.

To carry out the method according to the invention, there is also proposed a device for manufacturing of elements in laminated materials according to the introduction to claim 7. This device is characterized in that the means for joining and pressing of the layers against each other are arranged to position the nip in such a way that the coupling interface between the layers at the nip is positioned in a plane that is separate from a horizontal plane with an angle of at least 10° and the means for feeding are arranged for feeding in a substantially horizontal direction.

The problems occurring in prior art, when vertical feeding is used, have been described earlier and will in this way effectively be set aside.

According to a preferred embodiment of the device according to the invention, the nip is arranged in such a way that the coupling interface at the nip is positioned in a plane that is substantially perpendicular to a horizontal plane, i.e. substantially vertical.

Advantages will thereby be achieved, which are equivalent to the advantages which are already described for the method with corresponding characteristics, which already has been discussed.

Further advantages and preferred embodiments of the invention will be set forth in the following description and in the other dependent claims.

### BRIEF DESCRIPTION OF THE DRAWINGS

With reference to the enclosed drawings, below follows a detailed description of preferred embodiments of the device according to the invention, given as examples.

The drawings show:
Fig 1 a schematical perspective view of the device according to the invention,

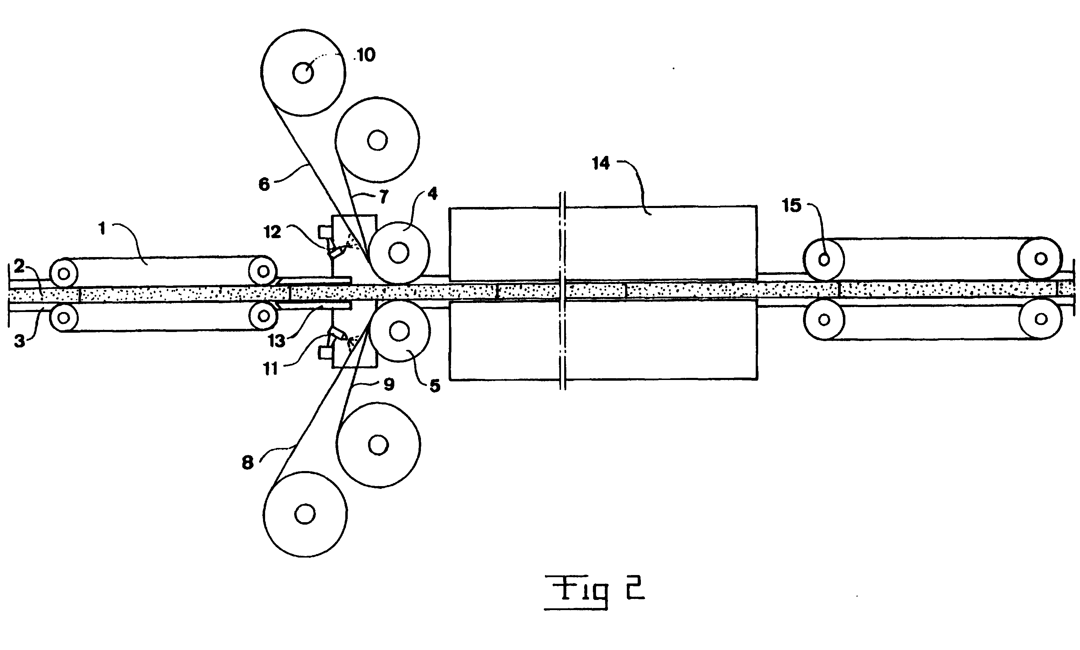

Fig 2 a view from above of the device according to Fig 1,
Fig 3 a perspective view of an alternative embodiment of the device according to Fig 1 and 2, and
Fig 4 a view from above of the device according to Fig 3.

### DETAILED DESCRIPTION OF PREFERRED EMBODIMENTS OF THE INVENTION

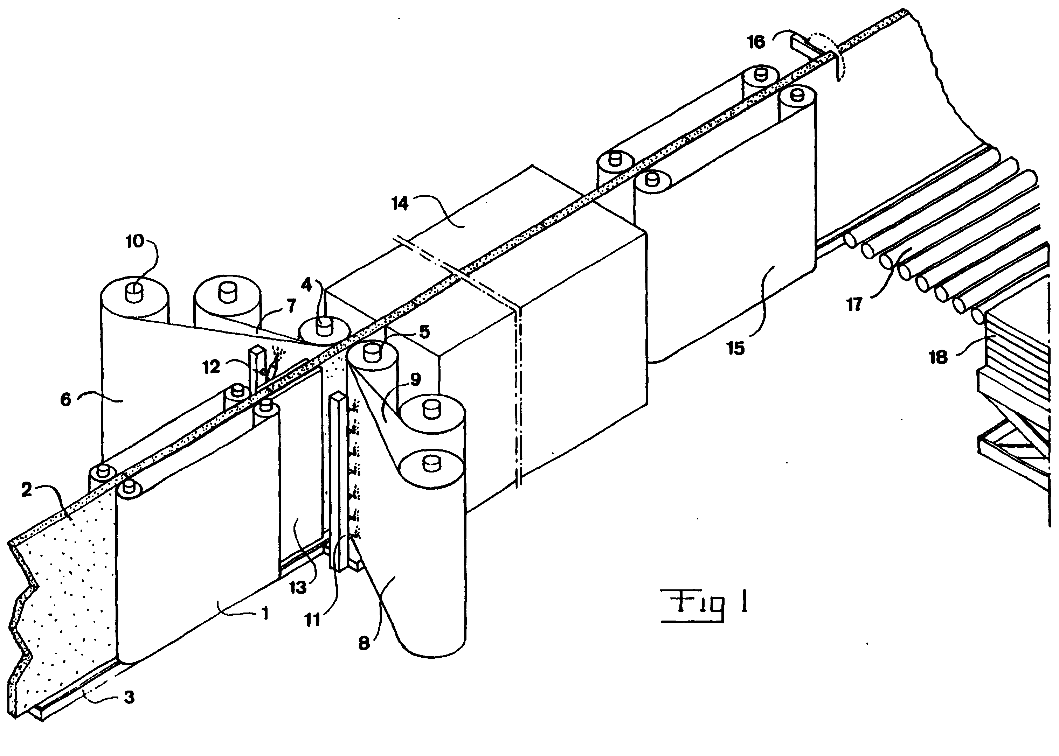

Fig 1 shows on principle how the method for manufacturing of elements in laminated materials is supposed to take place according to a preferred embodiment in accordance with the invention. It appears in Fig 1 that the device comprises means 1 for feeding of a layer 2 which will be joined with further layers 6, 7, 8, 9 with assistance of the device. The means 1 may thereby be arranged to feed also the laminated material or the laminate itself, as this forms a direct elongation of the layer 2, which is immediately fed by means of the means 1. In the preferred embodiment, the feeding means 1 comprise a pair of rolls on each side of the layer 2, each of which comprises an endless strip, which runs around the rolls and is designated to follow the movement of the rolls when they are put into rotation and thereby intervene with the layer 2 located between these rolls and thereby feed the layer 2 through the device There are also other solutions of the form of these means 1 that do not depart from the scope of the invention. It is for example possible to let these means 1 be formed by one or several rolls or one or several strips that will be arranged on the foundation or on the web 3 that supports the layer 2 and/or the laminate at its passing through the device.

As the feeding means 1, like the example illustrated in Fig 1, are arranged on both sides of the layer which they are intended to feed, it is suitable that at least one of the means is movable in a horizontal direction vertically against the feeding direction, in such a way that thereby the gap between the means 1 and their pressure against the layer 2 can be varied.

Furtheron, the device comprises means 4, 5 for joining and pressing further layers 6, 7, 8, 9 against the layer 2, which in the preferred embodiment forms an intermediate core layer or core material. The means 4, 5 for joining and pressing the layers 2, 6, 7, 8, 9 against each other form a nip inbetween themselves, which nip in this embodiment projects in substantially vertical direction. These means 4, 5 preferably comprise rolls arranged opposite each other on both sides of the laminated material, which rolls are arranged to receive the respective layers 2, 6, 7, 8, 9 inbetween themselves. At least one of the means for joining and pressing is similar to feeding means 1, movably arranged in horizontal direction substantially perpendicular to the feeding direction, in such a way that the width of the nip and/or these means' 4, 5 pressing of the laminated material may be varied.

From production technical reasons it may though be advantageous in some cases, for example when only two layers are joined and when the upper of these layers forms a thinner layer and the lower forms a thicker layer with inequalities on the surface, to position the nip in such a way that the coupling interface between the layers at the nip forms a fairly small angle compared to the horizontal plane, suitable in the magnitude of 10 to 20°. Normally is however a somewhat bigger inclination to prefer, preferably in the magnitude of 45° or above, particularly when more than three layers are joined and when the Intermediate of these layers is formed by a rough, possibly stiff layer with inequalities on the surface. Most advantageous is however when the plane of the coupling interface Is vertically positioned at the nip.

The core layer 2 consists in the preferred embodiment of a relatively stiff, foamed plastic material that, via the feeding means 1 is fed to the nip and there joined with and pressed against the outside located outer layers 6, 7, 8, 9, which conventionally are rolled up on drums or rolls, from which they are rolled off and, via the means 4, 5, advanced into the nip.

The device comprises further means 11, 12 supplying the layers 6, 8 with an adhesive and these means 11, 12 are suitably arranged to supply the adhesive, which typically is somewhat viscous, temperable, polymer material, like polyester, on the layers 6, 8, which are intended to abut closest to the core layer 2 and which typically consist of some fibrous material, like fibre glass. In the preferred embodiment, when the means 11, 12 are formed by several nozzles, these are preferably arranged to supply the adhesive in an amount up to the state of saturation of the layers 6, 8, whereby the layers 6, 8 are intended to be supplied such an amount adhesive that at least no flows will arise on these layers.

According to a specific case, where the outer layers 7, 9 are dense and do not transmit the adhesive, it is suitable to apply the adhesive on the surface of the outer layers 7, 9 facing core layer and possible layers 6, 8 located between outer layer and core layer. Thereby may an even absorption of the adhesive take place in existing intermediate layers 6, 8 as soon as they get in contact with the outer layers 7, 9, which makes that these, before they have reached the nip itself, show a relatively even distribution of the adhesive, which further favours effective lamination of core layer 2 against the outer located layers 6-9.

Fig 1 illustrates as well that the device in this embodiment comprises steering means 13, for steering the core layer when it is fed to the nip. These steering means have in the example the character of a pair of vertically oriented separate plate means.

In connection to the nip, after the nip in the feeding direction, is means 14 arranged for forming of the laminated material, which leaves the nip, to press and handle the laminated material in a wanted way and which tempers the adhesive. This means 14 comprises preferably two, by means of, for example electricity or warm oil, heated mould parts, which form the laminated material while heating it up and thereby speeding up the tempering of the adhesive. The means 14 is further provided with a member for soft and flexible application of its glide surfaces against the laminated material and in a preferred embodiment do these surfaces comprise supply of pressurized air, provided to form an air cushion that pressurizes one or both of the mould parts against the laminate. To vary the distance between the mould parts with respect to the width of the laminate and the variation of the, by means of the mould parts, applied pressure, at least one of the mould parts is movably arranged in horizontal direction preferably perpendicular to the feeding direction.

The device comprises further means 15 for feeding out the laminated material after it has passed through the forming means 14. The feeding out means 15 are in principle arranged and can be modified in the same way as the feeding means 1. The feeding out means 15 may also be considered to form part of the feeding means 1. In the same way as it is possible to use a combination of through leading of the elements via the feeding means and withdrawal of the elements through the arrangement by means of the feeding out means 15, it is also possible to use only one of these principles for feeding the elements through the device.

Fig 1 also illustrates cutting means 16, with which the elements are aimed to be cut in suitable lengths, and means 17, in the form of, for example rolls, with which the cut pieces of elements may be transported to an indicated store 18.

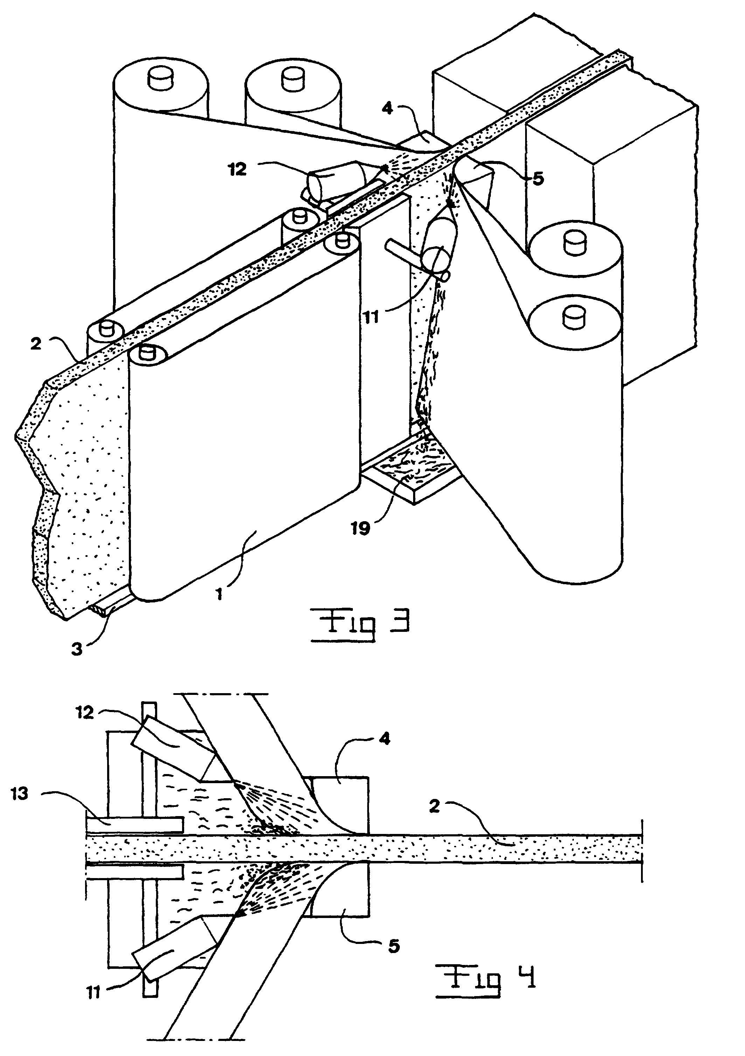

Fig 3 and 4 illustrate an alternative embodiment of the device according to the invention, by which the nip is inclined in the feeding direction.

The means 4, 5 forming the nip, provided for joining and pressing, are here showing stationary bent surfaces. The means 4, 5 are here illustrated in form of cylinder- or roll segments, which hints that both rolls or cylinders may be used for this purpose.

In Fig 3 there is further shown that the means 11, 12 supplying the adhesive are arranged to supply this in affluence at an upper edge of the layer 6, 8, that the adhesive is supplied. A bath of adhesive will thereby form at the nip, but thanks to the inclination of the nip, the adhesive will flow slower in vertical direction than if the nip would have been completely vertical. The adhesive, which is flowing off from the nip at the lower edge of the nip, gathers in a thereto arranged gathering apparatus 19. It is also possible to arrange more than one feeding means 11, 12 on each side of the core layer if desired.

A further advantage of inclining the nip in the feeding direction in this way, is that the risk of gas- and air inclusions between the layers will be further set aside, since similar gas or air in its strive to move upwards, thereby needs to cover a shorter distance in the adhesive bath before it reaches the atmosphere. A certain inclination of the nip, in the magnitude of 15° or more, is thus to prefer. An inclination in the magnitude of 45° or more is wanted, and even more wanted is an inclination in the magnitude of 60° or more, relative to a vertical plane, if the spaces and used material allow it.

The supply of the adhesive may take place in several different ways and on other layers than has been described here, for instance on the core layer. It is of course also possible to arrange the supply means 11, 12 in such a way that they are comprised in or form part of the means 4, 5 for joining and pressing of the layers, by means of that the last said means 4, 5 are provided with openings on their surfaces, which surfaces are aimed to abut against the layers and the layers are consequently supplied with the adhesive via said openings.

The invention will be most advantageous when elements of considerable length are manufactured, it may however be used advantageously also for manufacturing shorter elements.

## Claims

1. A method for manufacturing laminated materials, wherein at least two layers (2, 6, 7, 8, 9) are fed, joined and pressed against each other at a nip in such a way that a coupling interface between the layers is formed at the nip, and at least one of the layers is supplied with an adhesive for coupling the layers (2, 6, 7, 8, 9) before or adjacent to the nip,
**characterized in that** the nip is arranged in such a way that the coupling interface between the layers at the nip is positioned in a plane that is separate from a horizontal plane with an angle of at least 10° and that the feeding occurs in substantially horizontal direction.

2. A method according to claim 1,
**characterized in that** the nip is arranged in such a way that the plane of the coupling interface at the nip is substantially perpendicular to a horizontal plane.

3. A method according to any of the claim 2,
**characterized in that** the number of layers is three or more and that one of these layers forms an intermediate core layer (2) and that the other form outer layers (6, 7, 8, 9) located outside the core layer.

4. A method according to any of the claims 1-3,
**characterized in that** the nip is inclined in relation to the feeding direction.

5. A method according to any of the claims 1-4,
**characterized in that** the layer (6, 8) or at least one of the layers (2, 6, 7, 8, 9) supplied with the adhesive is impregnated with the adhesive to a state of saturation.

6. A method according to any of the claims 1-4,
**characterized in that** the adhesive is supplied in excess and at least partly at an upper edge of the layer (6, 8), which is supplied with the adhesive, in such a way that the adhesive is brought to flow downwards at the nip.

7. A device for manufacturing elements in laminated materials, wherein at least two layers (2, 6, 7, 8, 9) are joined and pressed against each other so as to form a coupling interface between them, the device comprising means (1) for feeding the various layer materials and the resulting laminate (2, 6, 7, 8, 9), means (4, 5) for joining and pressing the layers (2, 6, 7, 8, 9) against each other so as to form a nip and means (11, 12) for supplying at least one of the layers (2, 6, 7, 8, 9) with an adhesive,
**characterized in that** the means (4, 5) for joining and pressing of the layers (2, 6, 7, 8, 9) against each other are arranged to position the nip in such a way that the coupling interface between the layers (2, 6, 7, 8, 9) at the nip is located in a plane separate from a horizontal plane with an angle of at least 10° and that the feeding means (1) are arranged for feeding in substantially horizontal direction.

8. A device according to claim 7,
**characterized in that** the nip is arranged in such a way that the coupling interface at the nip is positioned in a plane substantially perpendicular to a horizontal plane.

9. A device according to claim 8,
**characterized in that** the number of layers is three or more and that one of these layers forms an intermediate core layer (2) and that the others form outer layers (6, 7, 8, 9) located outside the core layer.

10. A device according to any of the claims 7-9,
**characterized in that** the nip is inclined in the feeding direction.

11. A device according to any of the claims 7-10,
**characterized in that** the means (11, 12) supplying the adhesive are arranged to supply at least one of the layers (2, 6, 7, 8, 9) with the adhesive to the extent of saturation of the layer.

12. A device according to any of the claims 7-11,
**characterized in that** the means (11, 12) supplying the adhesive are arranged to supply the adhesive in excess and at least partly at an upper edge of the layer that is supplied with the adhesive, in such a way that the adhesive is brought to flow downwards the said layer at the nip.

## Patentansprüche

1. Verfahren zum Herstellen von Verbundmaterialien, wobei zumindest zwei Schichten (2, 6, 7, 8, 9) derart zugeführt, verbunden und an einer Berührungsstelle aneinander gepresst werden, dass an der Berührungsstelle eine Kopplungsfläche zwischen den Schichten gebildet wird und zumindest eine der Schichten mit einem Klebstoff beliefert wird, um die Schichten (2, 6, 7, 8, 9) vor oder benachbart der Berührungsstelle zu koppeln, **dadurch gekennzeichnet, dass** die Berührungsstelle derart angeordnet wird, dass die Kopplungsfläche zwischen den Schichten an der Berührungsstelle in einer Ebene positioniert ist, die von einer horizontalen Ebene um einen Winkel von zumindest 10° verschieden ist, und dass die Zufuhr in einer im Wesentlichen horizontalen Richtung erfolgt.

2. Verfahren nach Anspruch 1, **dadurch gekennzeichnet, dass** die Berührungsstelle derart angeordnet wird, dass die Ebene der Kopplungsfläche an der Berührungsstelle im Wesentlichen rechtwinklig zu einer horizontalen Ebene ist.

3. Verfahren nach Anspruch 2, **dadurch gekennzeichnet, dass** die Anzahl von Schichten drei oder größer ist, und dass eine dieser Schichten eine Zwischenkernschicht (2) bildet und dass die anderen Außenschichten (6, 7, 8, 9) bilden, die außerhalb der Kernschicht angeordnet werden.

4. Verfahren nach einem der Ansprüche 1 bis 3, **dadurch gekennzeichnet, dass** die Berührungsstelle bezüglich der Zufuhrrichtung schräg gestellt wird.

5. Verfahren nach einem der Ansprüche 1 bis 4, **dadurch gekennzeichnet, dass** die Schicht (6, 8) oder zumindest eine der Schichten (2, 6, 7, 8, 9), die mit dem Klebstoff beliefert wird, mit dem Klebstoff bis zu einem Sättigungszustand imprägniert wird.

6. Verfahren nach einem der Ansprüche 1 bis 4, **dadurch gekennzeichnet, dass** der Klebstoff im Überschuss und zumindest teilweise an einen oberen Rand der Schicht (6, 8), die mit dem Klebstoff beliefert wird, derart geliefert wird, dass veranlasst wird, dass der Klebstoff an der Berührungsstelle nach unten fließt.

7. Vorrichtung zur Verarbeitung von Elementen in Verbundmaterialien, wobei zumindest zwei Schichten (2, 6, 7, 8, 9) verbunden und aneinander gepresst werden, um so eine Kopplungsfläche zwischen diesen zu bilden, wobei die Vorrichtung umfasst: ein Mittel (1) zum Zuführen der verschiedenen Schichtmaterialien und des resultierenden Verbundstoffs (2, 6, 7, 8, 9), ein Mittel (4, 5) zum Verbinden und Aneinanderpressen der Schichten (2, 6, 7, 8, 9), um so eine Berührungsstelle zu bilden, und ein Mittel (11, 12) zur Belieferung zumindest einer der Schichten (2, 6, 7, 8, 9) mit einem Klebstoff, **dadurch gekennzeichnet, dass** das Mittel (4, 5) zum Verbinden und zum Aneinanderpressen der Schichten (2, 6, 7, 8, 9) derart angeordnet ist, dass die Berührungsstelle auf eine solche Weise positioniert wird, dass die Kopplungsfläche zwischen den Schichten (2, 6, 7, 8, 9) an der Berührungsstelle in einer Ebene angeordnet ist, die von einer horizontalen Ebene um einen Winkel von zumindest 10° verschieden ist, und dass das Zuführmittel (1) zum Zuführen in einer im Wesentlichen horizontalen Richtung angeordnet ist.

8. Vorrichtung nach Anspruch 7, **dadurch gekennzeichnet, dass** die Berührungsstelle derart angeordnet ist, dass die Kopplungsfläche an der Berührungsstelle in einer Ebene positioniert ist, die im Wesentlichen rechtwinklig zu einer horizontalen Ebene liegt.

9. Vorrichtung nach Anspruch 8, **dadurch gekennzeichnet, dass** die Anzahl von Schichten drei oder mehr ist, und dass eine dieser Schichten eine Zwischenkernschicht (2) bildet, und dass die anderen Außenschichten (6, 7, 8, 9) bilden, die außerhalb der Kernschicht angeordnet sind.

10. Vorrichtung nach einem der Ansprüche 7 bis 9, **dadurch gekennzeichnet, dass** die Berührungsstelle in der Zufuhrrichtung schräg gestellt ist.

11. Vorrichtung nach einem der Ansprüche 7 bis 10, **dadurch gekennzeichnet, dass** das Mittel (11, 12), das den Klebstoff liefert, derart angeordnet ist, um zumindest eine der Schichten (2, 6, 7, 8, 9) bis zu einem Sättigungsausmaß der Schicht mit dem Klebstoff zu beliefern.

12. Vorrichtung nach einem der Ansprüche 7 bis 11, **dadurch gekennzeichnet, dass** das Mittel (11, 12), das den Klebstoff liefert, derart angeordnet ist, um den Klebstoff im Überschuss und zumindest teilweise an einen oberen Rand der Schicht, die mit dem Klebstoff beliefert wird, derart zu liefern, dass veranlasst wird, dass der Klebstoff an der Berührungsstelle an der Schicht nach unten fließt.

## Revendications

1. Méthode pour fabriquer des matériaux stratifiés dans laquelle au moins deux couches (2, 6, 7, 8, 9) sont appliquées, jointes et pressées l'une contre l'autre au niveau d'un pincement, de telle façon qu'une interface d'assemblage entre les couches se forme au niveau du pincement et au moins une des couches est pourvue d'un adhésif pour assembler les couches (2, 6, 7, 8, 9) avant ou à côté du pincement, ***caractérisée en ce que*** le pincement est disposé de telle façon que l'interface d'assemblage entre les couches au niveau du pincement est placée dans un plan séparé d'un plan horizontal avec un angle d'au moins 10° et que l'alimentation se produit dans une direction essentiellement horizontale.

2. Méthode selon la revendication 1, **caractérisée en ce que** le pincement est disposé de telle façon que le plan de l'interface d'assemblage au niveau du pincement est sensiblement perpendiculaire à un plan horizontal.

3. Méthode selon la revendication 2, **caractérisée en ce que** le nombre de couches est de trois ou plus et **en ce qu'**une de ces couches forme une couche noyau intermédiaire (2) et **en ce que** les autres forment des couches externes (6, 7, 8, 9) disposées à l'extérieur de la couche noyau.

4. Méthode selon l'une quelconque des revendications 1 à 3, **caractérisée en ce que** le pincement est incliné par rapport à la direction d'alimentation.

5. Méthode selon l'une quelconque des revendications 1 à 4, **caractérisée en ce que** la couche (6, 8) ou au moins une des couches (2, 6, 7, 8, 9) pourvue en adhésif est imprégnée avec l'adhésif jusqu'à un état de saturation.

6. Méthode selon l'une quelconque des revendications 1 à 4, **caractérisée en ce que** l'adhésif est apporté en excès et au moins partiellement au niveau d'un bord supérieur de la couche (6, 8) qui est pourvue en adhésif, de telle façon que l'adhésif soit amené à couler vers le bas au niveau du pincement.

7. Dispositif pour fabriquer des éléments en matériaux stratifiés, dans lequel au moins deux couches (2, 6, 7, 8, 9) sont jointes et pressées l'une contre l'autre de façon à former une interface d'assemblage entre elles, le dispositif comprenant des moyens (1) pour alimenter les matériaux des différentes couches et le feuilleté résultant (2, 6, 7, 8, 9), des moyens (4, 5) pour joindre et presser les couches (2, 6, 7, 8, 9) les unes contre les autres de façon à former un pincement et des moyens (11, 12) pour alimenter au moins une des couches (2, 6, 7, 8, 9) en un adhésif, **caractérisé en ce que** les moyens (4, 5) pour joindre et presser les couches (2, 6, 7, 8, 9) les unes contre les autres sont disposés afin de placer le pincement de façon à ce que l'interface d'assemblage entre les couches (2, 6, 7, 8, 9) au niveau du pincement soit localisée dans un plan séparé d'un plan horizontal par un angle d'au moins 10° et que les moyens d' alimentation (1) sont disposés de façon à ce que l'alimentation se fasse dans une direction essentiellement horizontale.

8. Dispositif selon la revendication 7, **caractérisé en ce que** le pincement est disposé de manière à ce que l'interface d'assemblage au niveau du pincement soit placée dans un plan essentiellement perpendiculaire à un plan horizontal.

9. Dispositif selon la revendication 8, **caractérisé en ce que** le nombre de couches est de trois ou plus et **en ce que** une de ces couches forme une couche noyau intermédiaire (2) et **en ce que** les autres forment des couches externes (6, 7, 8, 9) localisées à l'extérieur de la couches noyau.

10. Dispositif selon l'une quelconque des revendications 7 à 9, **caractérisé en ce que** le pincement est incliné dans la direction de l'alimentation.

11. Dispositif selon l'une quelconque des revendications 7 à 10, **caractérisé en ce que** les moyens (11, 12) d'alimentation en adhésif sont disposés afin d'approvisionner au moins une des couches (2, 6, 7, 8, 9) en adhésif jusqu'à la saturation de la couche.

12. Dispositif selon l'une quelconque des revendications 7 à 11, **caractérisé en ce que** les moyens (11, 12) d'alimentation en adhésif sont disposés afin d'approvisionner en excès l'adhésif et au moins partiellement au niveau d'un bord supérieur de la couche qui est alimentée en adhésif, de façon à ce que l' adhésif soit amené à couler vers le bas de ladite couche au niveau du pincement.
